# FASCICULE DE BREVET EUROPEEN

(11) **EP 1 975 420 B1**
(45) Date de publication et mention de la délivrance du brevet: **08.05.2013**
(21) Numéro de dépôt: 08152790.5
(22) Date de dépôt: 14.03.2008
(51) Int. Cl.: F16B 5/02, F16B 35/06, F16B 39/282, E05B 9/00

(54) **Dispositif d'assemblage par vis d'au moins une pièce rigide sur un support et ouvrant équipé d'un tel dispositif**
Vorrichtung zur Montage von mindestens einem festen Teil auf einer Halterung mit Hilfe von Schrauben und Öffnungselement, das eine solche Vorrichtung umfasst
Device for screw assembly of at least one rigid part on a support and opening equipped with such a device

(30) Priorité: 29.03.2007 FR 0702303
(43) Date de publication de la demande: 01.10.2008
(73) Titulaire: SOTRALU, 31600 Muret (FR)
(72) Inventeur: Berton, Cyril, 31270, CUGNAUX (FR)
(74) Mandataire: Cabinet BARRE LAFORGUE & associés

(56) Documents cités:
- EP-A- 0 530 585
- FR-A1- 2 883 343
- GB-A- 2 429 039
- JP-A- 2005 273 702
- US-A- 4 339 179
- US-A- 5 199 839

## Description

L'invention concerne un dispositif d'assemblage par vis d'au moins une pièce rigide, dite pièce rapportée, sur une pièce réceptrice, dite support. L'invention concerne également un ouvrant -notamment un ouvrant coulissant- comprenant au moins une pièce rigide assemblé sur un support avec un dispositif d'assemblage selon l'invention.

On connaît déjà depuis fort longtemps des dispositifs d'assemblage par vis d'une pièce, dite pièce rapportée, sur un support, notamment des dispositifs d'assemblage d'une pièce d'ouvrant, tel qu'une ferrure de verrouillage, une tringle de coulissement, etc. sur un ouvrant.

Lors de l'assemblage entre une pièce rapportée et un support, il est nécessaire d'appliquer un couple de serrage qui soit suffisant pour une mise en tension de la vis qui permet la pénétration de la vis dans le support de manière à assurer une liaison rigide et démontable entre la pièce rapportée et le support. La valeur du couple de serrage appliquée conditionne la rigidité de l'assemblage, sa robustesse face aux vibrations, aux variations thermiques, aux chocs, etc. La valeur du couple de serrage à appliquer dépend notamment des frottements du filetage de la vis sur le support, c'est-à-dire notamment du type de vis, du filetage de la vis, du matériau de la vis et du support.

Il est possible de calculer, par des méthodes semi empiriques, préalablement à l'assemblage, une valeur de couple permettant un assemblage optimal de la pièce rapportée sur le support, et de recourir, par exemple, à une clé dynamométrique pour appliquer la valeur du couple de vissage ainsi déterminée. Cette méthode est en réalité peu fiable car la valeur du couple résultant n'est pas connue du fait de paramètres non aisément mesurables au moment du serrage (lubrification des pièces, déformation des pièces, etc.). Il est également possible d'utiliser un limiteur de couple pour ne pas dépasser une valeur prédéterminée. Une telle solution est peu adaptée aux matériaux tendres tels que les matériaux thermoplastiques en raison des faibles valeurs de couple admissibles. En effet, les limiteurs de couple des visseuses électriques industrielles ne permettent pas d'imposer un couple limite suffisamment faible, notamment pour le vissage d'une vis dans un matériau tendre.

Dans la plupart des cas, la valeur du couple appliqué est déterminée au jugé de l'opérateur chargé de l'assemblage.

Indépendamment de la méthode utilisée, les conséquences d'un couple mal défini peuvent être très gênantes, voire dangereuses pour certaines applications, notamment les applications d'ouvrant. En particulier, un couple trop faible peut conduire au désassemblage de la pièce rapportée du support ou à un assemblage branlant, et un couple trop fort peut provoquer le cisaillement des filets. Le cisaillement des filets est plus connu dans le langage courant sous le terme de « foirage » de la vis. Ce cisaillement des filets est d'autant plus fréquent que le matériau du support dans lequel la vis est vissée est un matériau tendre, du type bois, cellulose, plâtre, plastique, etc.

FR 2 883 343 décrit un dispositif adapté pour limiter la faculté de serrer une vis après assemblage d'une pièce rapportée sur un support, de manière à empêcher tout cisaillement des filets de cette vis. Ce dispositif comprend une vis présentant un anneau hélicoïdal, par exemple en plastique, bloqué sous la tête de vis. Cet anneau hélicoïdal est adapté pour venir se loger dans le fond d'un logement de réception de l'anneau ménagé dans la pièce rapportée à assembler au support. L'anneau hélicoïdal est adapté pour qu'un effort de serrage de la vis modifie le diamètre extérieur de l'anneau, ce qui entraîne un placage de l'anneau contre les parois latérales du logement de réception et s'oppose ainsi à la rotation de la vis par frottement entre l'anneau et les parois latérales du logement.

Un tel dispositif permet donc de limiter la rotation de la vis, en fin de vissage par frottement d'un anneau hélicoïdal solidaire de la vis sur des parois latérales d'un logement de réception de la vis. Un tel dispositif impose donc un usinage précis du logement de réception de la vis suivant des dimensions prédéterminées qui garantissent que l'expansion de l'anneau amène ce dernier en contact bloquant sur les parois latérales du logement de réception. De plus, les parois latérales du logement doivent présenter une surface suffisamment importante pour que les frottements entre l'anneau et ces parois soient suffisants pour bloquer la rotation de la vis dans le logement de réception. Un tel dispositif est donc peu adapté aux pièces fines qui ne permettent pas de ménager un logement de réception dont les parois présente une surface suffisante de contact.

De plus, un tel dispositif impose une fixation de l'anneau hélicoïdal sous la tête de vis qui permet d'une part à l'anneau hélicoïdal de s'étendre en fin de vissage et d'autre part de maintenir l'anneau hélicoïdal sous la tête de vis pour faciliter les opérations de manipulation. Cette double fonction est réalisée par un anneau hélicoïdal qui enserre la tête de vis pour pouvoir être solidaire de la vis sans entraver son expansion. Les dimensions de la vis sont donc étroitement liées aux dimensions de l'anneau hélicoïdal. A chaque type de vis correspond donc un type prédéterminé d'anneau hélicoïdal.

Un tel dispositif doit donc être adapté à chaque application et les modifications de structures imposées ne sont pas négligeables.

Le blocage de la rotation en fin de vissage est également dépendant du coefficient de frottement intrinsèque entre l'anneau hélicoïdal, qui doit présenter des propriétés d'élasticité en compression, et le matériau de la pièce rapportée. Un tel dispositif se prête donc assez mal à la fixation d'une pièce rapportée sur un support en matériau thermoplastique notamment.

L'invention vise à pallier l'ensemble de ces inconvénients et à fournir un dispositif d'assemblage par vis d'une pièce sur un support qui supprime les risques de cisaillement des filets de la vis et/ou du support.

L'invention vise en particulier à fournir un tel dispositif d'assemblage qui puisse être utilisé et mis en oeuvre sur tous types de matériau.

L'invention vise aussi à fournir un tel dispositif d'assemblage qui puisse être utilisé sur des supports de toutes épaisseurs.

L'invention vise également à fournir un tel dispositif d'assemblage qui puisse être produit en grande série sans difficultés particulières.

L'invention vise également à fournir un tel dispositif d'assemblage qui soit économique à fabriquer et à utiliser.

L'invention vise également à fournir un tel dispositif d'assemblage qui puisse être utilisé par un opérateur sans aptitudes particulières.

L'invention vise également à fournir un dispositif d'assemblage d'une pièce rigide sur un support qui puisse recourir, pour le vissage de la vis dans le support, à une visseuse électrique industrielle à limiteur de couple standard, sans risque de cisaillement des filets de la vis et/ou du support.

L'invention vise également à fournir un tel dispositif d'assemblage par vis autotaraudeuse.

L'invention vise également à fournir un ouvrant comprenant au moins une pièce rigide assemblée à au moins un support avec au moins un tel dispositif d'assemblage.

Pour ce faire, l'invention concerne un dispositif d'assemblage d'au moins une pièce rigide, dite pièce rapportée, sur un support, ledit dispositif d'assemblage comprenant :
- une vis comprenant :
   - une tige s'étendant le long d'un axe, ladite tige étant filetée sur au moins une partie de sa longueur,
   - une tête de vis adaptée pour coopérer avec un outil de vissage et présentant une surface, dite surface de pression dont les dimensions radiales sont supérieures aux dimensions radiales de ladite tige, ladite surface de pression étant adaptée pour venir en contact d'une portion, dite portion de contact, de ladite pièce rapportée en fin de vissage,
- une lumière ménagée à travers ladite pièce rapportée et délimitée par ladite portion de contact, ladite lumière présentant des dimensions internes adaptées pour permettre un passage de ladite tige filetée jusqu'à un contact entre ladite surface de pression de la vis et ladite portion de contact de la pièce rapportée,
caractérisé en ce que ladite surface de pression de ladite vis et ladite portion de contact de ladite pièce rapportée présentent des reliefs et/ou renfoncements conjugués, dits organes d'encastrement conjugués, non symétriques de révolution par rapport audit axe de ladite tige, lesdits organes d'encastrement conjugués étant adaptés pour s'encastrer les uns dans les autres en fin de vissage de ladite vis dans ledit support de manière à augmenter le couple résistant au vissage.

Un dispositif d'assemblage selon l'invention comprend des organes d'encastrement conjugués, non symétriques de révolution, agencés respectivement sous la tête de vis de la vis et sur la pièce rapportée. Dès lors, un dispositif selon l'invention est particulièrement simple à réaliser et n'impose aucune contrainte en terme d'épaisseur de la pièce rapportée.

Les organes d'encastrement conjugués ont pour fonction d'augmenter le couple résistant au vissage, en fin de vissage de la vis. Dès lors, un opérateur chargé d'assembler une pièce rapportée sur un support avec un tel dispositif d'assemblage, sentira, en fin de vissage, que le couple résistant est nettement plus important qu'avant l'encastrement des organes conjugués. Cette sensation est le signe que l'assemblage est suffisamment serré. De même, une clé dynamométrique indiquera un couple de serrage suffisant, avant le cisaillement des filets. L'encastrement d'organes conjugués les uns dans les autres présente un meilleur pouvoir bloquant que l'augmentation des frottements de surfaces de l'art antérieur. Ces organes d'encastrement sont non symétriques de révolution par rapport à l'axe de la vis pour s'opposer à la rotation de la vis. Ces organes d'encastrement peuvent présenter différentes formes et structures. Ils peuvent également être adaptés au type de matériau dans lequel une pièce rapportée est fixée.

Les organes d'encastrement sont formés de reliefs et de creux conjugués. Selon une variante de l'invention, la portion de contact d'une pièce rapportée comprend des reliefs et des creux et la surface de pression de la tête de vis comprend des creux et des reliefs conjugués aux reliefs et creux de la portion de contact.

Selon une autre variante, la portion de contact comprend uniquement des creux et la surface de pression de la tête de vis comprend uniquement des reliefs conjugués à ces creux.

Selon une autre variante, la portion de contact comprend uniquement des reliefs et la surface de pression de la tête de vis comprend uniquement des creux conjugués à ces reliefs.

Les organes d'encastrement conjugués peuvent présenter différentes formes et dimensions. Ces organes sont adaptés pour s'encastrer les uns dans les autres de manière à augmenter le couple résistant au vissage.

Avantageusement et selon l'invention, lesdits organes d'encastrement agencés sur ladite surface de pression de ladite vis sont des nervures et lesdits organes d'encastrement conjugués agencés sur ladite portion de contact de ladite pièce rapportée sont des échancrures adaptées pour recevoir lesdites nervures en fin de vissage.

Selon cette variante de l'invention, les organes d'encastrement de la surface de pression sont des reliefs réalisés par des nervures. Les organes d'encastrement conjugués sont des creux réalisés par des échancrures adaptées pour recevoir les nervures de la surface de pression.

Avantageusement et selon l'invention, le nombre de nervures de ladite surface de pression de ladite vis est inférieur au nombre d'échancrures de ladite portion de contact de ladite pièce rapportée.

Dès lors, chaque nervure peut venir s'encastrer dans au moins une échancrure.

Les nervures et les échancrures sont non symétriques de révolution par rapport à l'axe de la vis. Les échancrures et les nervures s'étendent de préférence radialement pour optimiser l'augmentation du couple résistant au vissage.

De plus, il est particulièrement aisé de ménager des échancrures dans une pièce à fixer sur un support qui comprend déjà une lumière de réception d'une vis. Par exemple, ces échancrures peuvent être des petites encoches découpées sur la périphérie de la lumière de la pièce dans lesquelles peuvent venir se loger les nervures ménagées sur la surface de pression de la tête de vis, en fin de vissage.

De même, il est relativement aisé de fabriquer une vis comprenant des nervures agencées sur la surface de pression d'une vis à partir d'une vis déjà existante.

Une vis d'un dispositif d'assemblage selon l'invention peut comprendre une ou plusieurs nervures ménagées sur la surface de pression de la vis. Dans le cas où la surface de pression présente au moins deux nervures, ces dernières peuvent être agencées l'une par rapport à l'autre suivant une variété d'agencements.

Avantageusement et selon l'invention, lesdites nervures sont régulièrement réparties autour dudit axe de ladite tige filetée.

Avantageusement et selon l'invention, ladite surface de pression présente six nervures séparées les unes des autres d'un angle de 60°.

Un dispositif selon l'invention permet l'assemblage par vis d'une pièce sur un support qui empêche le cisaillement des filets de la vis. Le support peut comprendre des trous taraudés préalablement au vissage de la vis dans le support. Le support peut également être non préalablement taraudé. Pour ce faire, le support est de préférence réalisé en un matériau tendre, tel qu'un matériau thermoplastique et la vis est une vis autotaraudeuse.

Avantageusement et selon l'invention, ladite vis est une vis autotaraudeuse et ledit support est en matériau tendre non préalablement taraudé au niveau de la zone de réception de ladite vis autotaraudeuse.

Un dispositif selon l'invention comprenant des organes d'encastrement conjugués agencés respectivement sur une vis autotaraudeuse et sur la portion de contact d'une pièce rapportée est particulièrement efficace et utile pour la fixation de la pièce rapportée sur un support en matériau tendre. En effet, le risque de cisaillement des filets de la vis est d'autant plus important que le matériau du support est tendre.

Tous types de vis peuvent servir de base à la réalisation d'une vis d'un dispositif selon l'invention.

Néanmoins, avantageusement et selon l'invention, la vis présente une tige filetée à double filetage hélicoïdale de manière à pouvoir résister aux tentatives d'arrachement de la vis.

Une tige filetée à double filetage hélicoïdal est une bonne protection à l'arrachement de la vis. Une telle tige est donc particulièrement destinée à un dispositif d'assemblage selon l'invention pour ouvrant aux fins de renforcer l'inviolabilité des espaces clôturés par un tel ouvrant.

De même, une vis selon l'invention présente de préférence une tige réalisée en un matériau métallique. Néanmoins, selon une variante de l'invention, la vis peut présenter une tige en un matériau du type plastique dur, par exemple pour les assemblages de précision ou pour les assemblages présentant des contraintes particulières de poids.

Une vis selon l'invention comprend une tête de vis adaptée pour coopérer avec un outil de vissage de manière à ce que cet outil puisse imprimer le couple de serrage. La tête de vis peut, par exemple, comprendre une empreinte adaptée pour recevoir un outil de manière à pouvoir appliquer le couple de mise en pression de la vis.

Pour ce faire, la tête d'une vis selon l'invention peut présenter tous types de formes et de dimensions. La tête de la vis peut être une tête fendue, une tête cruciforme, une tête Torx, une tête à six pans creux ou fraisés, etc.

L'invention s'étend à un ouvrant coulissant comprenant au moins une pièce rigide assemblée à un support par un dispositif d'assemblage selon l'invention.

Pour ce faire, l'invention concerne aussi un ouvrant - notamment ouvrant coulissant, de porte, fenêtre ou analogue comprenant :
- un cadre formé de profilés creux,
- au moins une pièce, dite support, portée par ledit cadre,
- au moins une pièce rigide assemblée audit support,
caractérisé en ce que ladite pièce rigide est assemblée audit support par au moins un dispositif d'assemblage selon l'invention.

Un dispositif d'assemblage selon l'invention permet d'assembler rigidement une pièce rapportée sur un support sans risque de détérioration des filets. Un dispositif selon l'invention est donc particulièrement adapté à l'assemblage de pièces d'ouvrants, notamment d'ouvrants coulissants. Les ouvrants, notamment les ouvrants coulissants, nécessitent des assemblages rigides qui interdisent tout déplacement d'une pièce rapportée par rapport à un support. Surabondamment, les ouvrants sont des structures sensibles d'un bâtiment telle qu'une habitation qui forment la frontière entre l'espace privée et l'espace public. Dès lors, il est important que l'assemblage des différentes pièces qui forment un ouvrant soient rigidement assemblées les unes aux autres. Les couples de serrage doivent donc être correctement appliqués pour déjouer par exemple les tentatives de démontage d'un ouvrant en vue d'une introduction malintentionnée d'un individu dans l'espace privé. De plus, un tel ouvrant doit être suffisamment rigide pour résister aux éventuelles intempéries.

Par ailleurs, les pièces formant un ouvrant étant relativement nombreuses et peu économiques, il faut s'assurer que les assemblages réalisés n'entraînent pas un cisaillement des filets au risque de devoir reprendre intégralement la réalisation de l'ouvrant, démultipliant ainsi le coût de l'installation d'un tel ouvrant.

Un dispositif selon l'invention est donc particulièrement adapté à un ouvrant, notamment à un ouvrant coulissant. Les pièces d'un ouvrant assemblées par un dispositif selon l'invention peuvent être de tous types. Il s'agit, par exemple, d'une têtière assemblée à une garniture d'isolation en un matériau thermoplastique, d'une ferrure montée sur un chant d'un ouvrant, etc.

Un dispositif selon l'invention permet un assemblage rapide, en grande série, de manière simple et sans prendre de précautions particulières. Par ailleurs, un dispositif selon l'invention permet l'utilisation d'une visseuse électrique standard sans risque de cisaillement des filets de la vis et/ou du support. Un dispositif selon l'invention permet donc de réduire les coûts de fabrication d'un ouvrant selon l'invention.

L'invention concerne en outre un dispositif d'assemblage par vis d'une pièce rapportée sur un support et un ouvrant comprenant au moins une pièce rigide assemblée sur un support par un tel dispositif d'assemblage caractérisés en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique en perspective d'une vis d'un dispositif d'assemblage selon un mode de réalisation de l'invention,
- la figure 2 est une vue schématique en coupe d'une vis d'un dispositif d'assemblage selon un mode de réalisation de l'invention,
- la figure 3 est une vue schématique en perspective éclatée d'un dispositif d'assemblage selon un mode de réalisation de l'invention comprenant une vis et une pièce rigide,
- la figure 4 est une vue schématique en perspective éclatée d'un dispositif d'assemblage selon un autre mode de réalisation de l'invention comprenant une vis et une pièce rigide,
- la figure 5 est une vue schématique en coupe d'une pièce rigide assemblée sur un support par un dispositif d'assemblage selon un mode de réalisation de l'invention,
- la figure 6 est une vue schématique d'une porte selon un mode de réalisation de l'invention comprenant une ferrure assemblée au chant d'une porte par un dispositif d'assemblage selon l'invention.

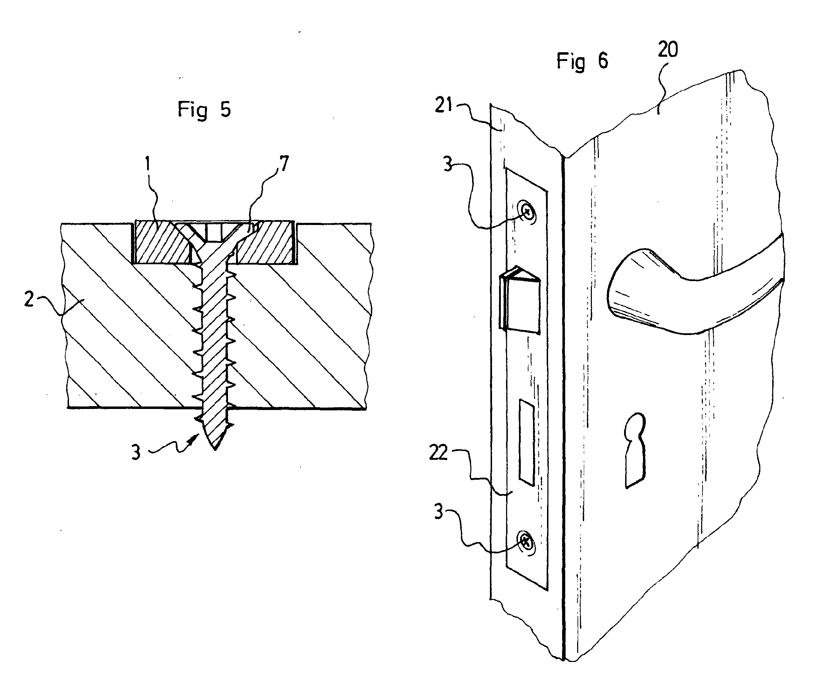

Selon l'invention et tel que représenté sur la figure 5, un dispositif d'assemblage d'une pièce rigide, dite pièce 1 rapportée, sur un support 2, comprend une vis 3.

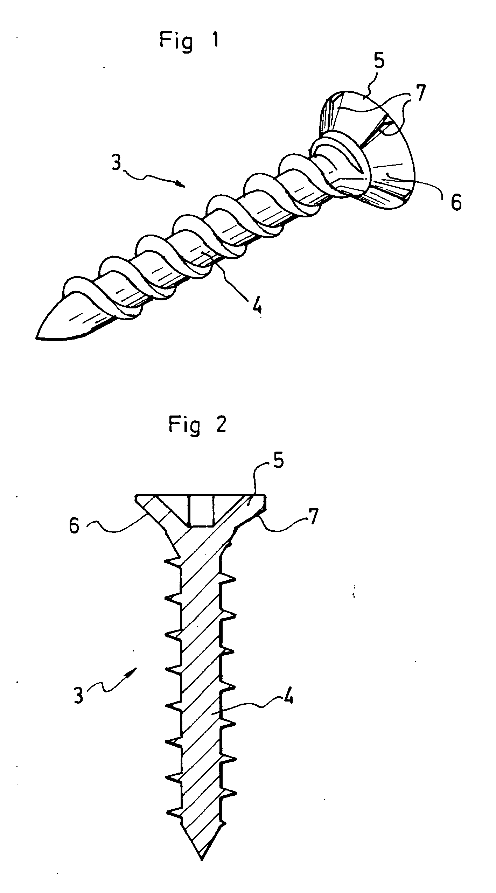

Cette vis 3 comprend, tel que représenté notamment sur les figures 1 et 2, une tige 4 s'étendant le long d'un axe, la tige 4 étant filetée sur au moins une partie de sa longueur. La vis 3 comprend également une tête 5 de vis adaptée pour coopérer avec un outil de vissage, tel qu'une visseuse électrique à limiteur de couple.

Cette tête 5 de vis peut comprendre, de manière connue, une empreinte adaptée pour recevoir un outil de manière à pouvoir appliquer le couple de mise en pression de la vis. Pour ce faire, la tête 5 de vis peut présenter tous types de formes et de dimensions. La tête 5 de vis peut être une tête fendue, une tête cruciforme, une tête Torx, une tête à six pans creux, une tête fraisée, etc.

La vis 3 selon l'invention comprend également une surface, dite surface 6 de pression, dont les dimensions radiales sont supérieures aux dimensions radiales de la tige 5. Cette surface 6 de pression est adaptée pour venir en contact d'une portion, dite portion 12 de contact, de ladite pièce 1 rapportée en fin de vissage.

La pièce 1 rapportée comprend une lumière 13 ménagée à travers la pièce 1 rapportée et délimitée par la portion 12 de contact. Cette lumière présente des dimensions internes adaptées pour permettre un passage de la tige 4 filetée jusqu'à un contact entre la surface 6 de pression de la vis 3 et la portion 12 de contact de la pièce 1 rapportée. La longueur de la tige 4 de la vis 3 doit être supérieure à l'épaisseur de la pièce 1 rapportée pour qu'elle puisse être vissée sur le support 2.

Le filetage de la tige 4 de la vis 3 peut présenter diverses formes, hélicoïdale, trapézoïdale, etc. Néanmoins, de préférence, la vis 3 présente au moins un filet hélicoïdal. Selon un mode de réalisation avantageux, la vis 3 présente un double filet hélicoïdal de manière à pouvoir efficacement résister aux tentatives d'arrachage de la vis 3 du support 2 auquel elle est vissée.

Un dispositif d'assemblage selon l'invention comprend en outre des reliefs et/ou renfoncements conjugués, dits organes d'encastrement conjugués, non symétriques de révolution par rapport audit axe de la tige 4 de la vis, et adaptés pour s'encastrer les uns dans les autres en fin de vissage de la vis 3 de manière à augmenter le couple résistant au vissage.

Les reliefs et creux peuvent présenter différentes formes et dimensions. Selon un mode de réalisation préférentiel, tel que représenté sur les figures, les reliefs sont des nervures 7 et les creux sont des échancrures 8 adaptées pour recevoir les nervures 7 en fin de vissage.

Les nervures et les échancrures sont agencées sur la surface de pression de la vis et sur la portion de contact de la pièce rapportée.

Selon un mode de réalisation non représenté sur les figures, la portion de contact de la pièce rapportée peut comprendre des nervures et des échancrures.

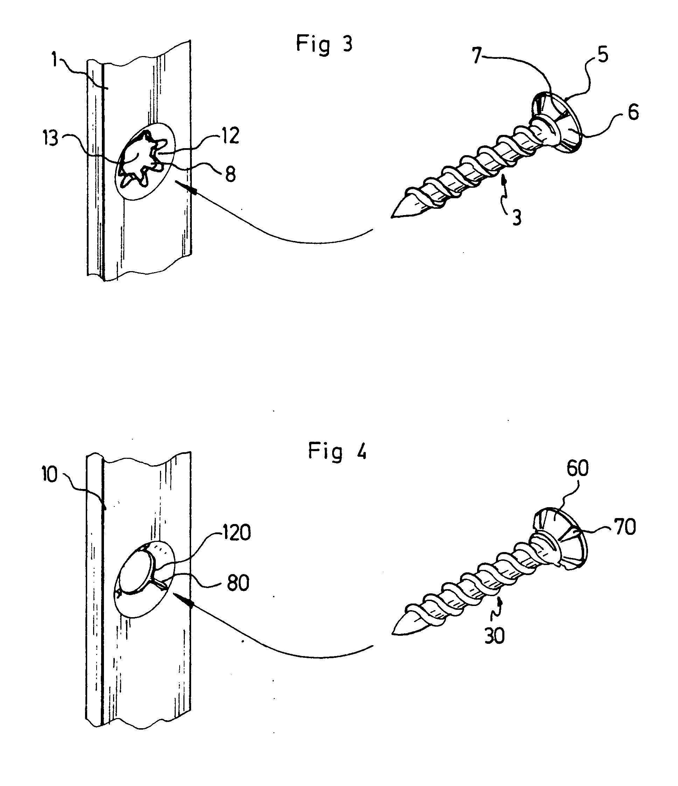

Selon un autre mode de réalisation tel que représenté sur la figure 4, la portion 120 de contact comprend uniquement des nervures 80.

Selon une variante de l'invention, tel que représenté sur la figure 3, la portion 12 de contact de la pièce 1 rapportée comprend des échancrures 8 et la surface 6 de pression de la tête 5 de vis comprend des nervures 7 conjuguées adaptées pour se loger dans les échancrures 8 en fin de vissage.

La surface 6 de pression de la tête 5 de vis peut comprendre une ou plusieurs nervures 7 et la portion 12 de contact de la pièce rapportée peut comprendre une ou plusieurs échancrures 8.

De préférence, le nombre de nervures 7 est inférieur au nombre d'échancrures 8 de manière à ce que chaque nervure 7 puisse s'encastrer dans une échancrure.

Les nervures 7 et les échancrures 8 sont non symétriques de révolution par rapport à l'axe de la vis 3. Les échancrures 8 et les nervures 7 s'étendent de préférence radialement pour optimiser l'augmentation du couple résistant au vissage.

Lorsque les nervures 7 s'encastrent dans les échancrures 8, le couple résistant au vissage augmente de manière significative, ce qui permet d'empêcher le cisaillement des filets ménagés par la vis 3 dans le support 2. Un dispositif d'assemblage selon l'invention permet donc d'améliorer significativement la qualité d'un assemblage d'une pièce 1 rigide sur un support 2, notamment sur un support 2 en un matériau tendre, tel qu'un matériau thermoplastique, un plâtre, un aggloméré, etc. En effet, un support 2 en un matériau tendre est très sensible au couple exercé sur une vis lors du vissage d'une vis dans ce dernier.

La répartition des nervures 7 sur la surface de pression 6 de la vis 3 peut être de tout type.

Selon un mode de réalisation, la surface 6 de pression de la vis 3 comprend six nervures 7, séparées les unes des autres d'un angle de 60 degrés. Néanmoins, rien n'empêche de prévoir un nombre différent de nervures 7 et une répartition différente.

Selon un autre mode de réalisation, et tel que représenté sur la figure 4, la portion 120 de contact d'une pièce 10 rapportée comprend uniquement des nervures 80 et la surface 60 de pression de la tête de vis d'une vis 30 comprend uniquement des échancrures 70 conjuguées à ces nervures 80.

Selon ce mode de réalisation, l'encastrement des nervures 80 de la portion 120 de contact de la pièce 10 rapportée dans les échancrures 70 de la surface de pression 60 de la vis 30 provoque une augmentation du couple résistant au vissage, ce qui permet d'éviter le cisaillement des filets ménagés dans le support par la tige filetée de la vis 30.

Un dispositif d'assemblage selon l'invention permet l'assemblage de tous types de pièces rigides sur tous types de support, notamment sur des supports en matériau tendre.

La figure 6 présente un exemple d'utilisation d'un tel dispositif d'assemblage sur un ouvrant.

Selon ce mode de réalisation, un ouvrant 20 comprend un chant 21 sur lequel est monté une ferrure 22. Cette ferrure 22 s'étend selon une direction, dite direction longitudinale, et comprend deux lumières, chaque lumière étant agencée au voisinage de chacune de ses extrémités longitudinales. Chacune des lumières est bordée d'une surface de contact comprenant des reliefs et/ou creux. Chaque lumière est adaptée pour permettre le passage d'une vis 3 comprenant une surface de pression comprenant des creux et/ou reliefs conjugués aux reliefs et/ou creux de la surface de contact bordant cette lumière. Ces reliefs et/ou creux conjugués sont adaptés pour s'encastrer les uns dans les autres en fin de vissage de manière à augmenter le couple résistant au vissage, ce qui permet d'éviter le cisaillement des filets ménagés dans le chant 21 de l'ouvrant recevant les vis 3.

Bien entendu, un ouvrant selon l'invention peut comprendre d'autres pièces rapportées assemblées à d'autres supports avec des dispositifs d'assemblage selon l'invention.

L'assemblage d'une pièce rapportée sur un support par un dispositif d'assemblage selon l'invention peut par exemple est réalisé de la façon suivante : dans une première étape, une pièce rigide à fixer sur un support est positionnée sur le support et maintenu sur le support, par exemple par la main d'un opérateur ; une vis est ensuite passée à travers la lumière de la pièce rigide à fixer ; la vis est ensuite maintenue en position à travers la lumière, par exemple, entre les doigts de l'opérateur de la main qui maintient la pièce rapportée ; l'opérateur peut ensuite se saisir d'un outil de vissage, tel qu'une visseuse électrique à limiteur de couple, et actionner la visseuse de manière à visser la vis dans le support ; en fin de vissage, les organes d'encastrement de la vis vont s'encastrer dans les organes d'encastrement conjugués de la pièce rigide, provoquant ainsi une augmentation du couple résistant au vissage, ce qui va bloquer la visseuse ; la pièce rigide est alors assemblée au support avec la garantie que les filets de la vis et du support ne sont pas cisaillés.

Un tel assemblage peut être réalisé rapidement, par l'utilisation, par exemple, d'une visseuse électrique à limiteur de couple, sans néanmoins nécessiter de précautions particulières, et sans risquer de détériorer les filets de la vis ou du support.

Un dispositif selon l'invention est donc particulièrement adapté à l'assemblage à la chaîne de pièces rigides sur des supports, notamment pour des ouvrants.

## Revendications

1. Dispositif d'assemblage d'au moins une pièce rigide, dite pièce (1 ; 10 ; 22) rapportée, sur une pièce, dite support (2 ; 21), portée par un cadre d'un ouvrant de porte, fenêtre ou analogue, ledit dispositif d'assemblage comprenant :
- une vis (3 ; 30) comprenant :
. une tige (4) s'étendant le long d'un axe, ladite tige (4) étant filetée sur au moins une partie de sa longueur,
. une tête (5) de vis adaptée pour coopérer avec un outil de vissage et présentant une surface, dite surface (6 ; 60) de pression, dont les dimensions radiales sont supérieures aux dimensions radiales de ladite tige (4), ladite surface (6 ; 60) de pression étant adaptée pour venir en contact d'une portion, dite portion (12 ; 120) de contact, de ladite pièce (1 ; 10) rapportée en fin de vissage,
- une lumière (13) ménagée à travers ladite pièce (1 ; 10 ; 22) rapportée et délimitée par ladite portion (12 ; 120) de contact, ladite lumière (13) présentant des dimensions internes adaptées pour permettre un passage de ladite tige (4) filetée jusqu'à un contact entre ladite surface (6 ; 60) de pression de la vis (3 ; 30) et ladite portion (12 ; 120) de contact de la pièce (1 ; 10 ; 22) rapportée,
**caractérisé en ce que** ladite surface (6 ; 60) de pression de ladite vis (3 ; 30) et ladite portion (12 ; 120) de contact de ladite pièce (1 ; 10 ; 22) rapportée présentent des reliefs (7 ; 80) et/ou renfoncements (8 ; 70) conjugués, dits organes d'encastrement conjugués, non symétriques de révolution par rapport audit axe de ladite tige (4), lesdits organes d'encastrement conjugués étant adaptés pour s'encastrer les uns dans les autres en fin de vissage de ladite vis (3 ; 30) dans ledit support (2 ; 21) de manière à augmenter le couple résistant au vissage.

2. Dispositif selon la revendication 1, **caractérisé en ce que** ladite vis (3 ; 30) est une vis auto taraudeuse et **en ce que** ledit support (2) est en matériau tendre non préalablement taraudé au niveau de la zone de réception de ladite vis auto taraudeuse.

3. Dispositif selon l'une des revendications 1 à 2, **caractérisé en ce que** ladite tige (4) filetée présente un double filetage hélicoïdal de manière à pouvoir résister aux tentatives d'arrachement de la vis.

4. Dispositif selon l'une des revendications 1 à 3, **caractérisé en ce que** lesdits organes d'encastrement agencés sur ladite surface (6) de pression de ladite vis (3) sont des nervures (7) et lesdits organes d'encastrement conjugués agencés sur ladite portion (12) de contact de ladite pièce (1) rapportée sont des échancrures (8) adaptées pour recevoir lesdites nervures (7) en fin de vissage de ladite vis (3).

5. Dispositif selon l'une des revendications 1 à 3, **caractérisé en ce que** lesdits organes d'encastrement agencés sur ladite surface (60) de pression de ladite vis (30) sont des échancrures (70) et lesdits organes d'encastrement conjugués agencés sur ladite portion (120) de contact de ladite pièce (10) rapportée sont des nervures (80) adaptées pour se loger dans lesdites échancrures (70) en fin de vissage de ladite vis (30).

6. Dispositif selon l'une des revendications 4 ou 5, **caractérisé en ce que** le nombre de nervures (7 ; 80) est inférieur au nombre d'échancrures (8 ; 70).

7. Dispositif selon la revendication 4, **caractérisé en ce que** lesdites nervures (7) de ladite surface (6) de pression de ladite vis (3) sont régulièrement réparties autour dudit axe de ladite tige (4) filetée.

8. Dispositif selon la revendication 7, **caractérisé en ce que** ladite surface (6) de pression de ladite vis (3) présente six nervures (7) séparées les unes des autres d'un angle de 60°.

9. Dispositif selon l'une des revendications 1 à 8, **caractérisé en ce que** ladite tête (5) de vis est fraisée.

10. Ouvrant de porte, fenêtre ou analogue comprenant :
- un cadre,
- au moins une pièce, dite support (21), portée par ledit cadre,
- au moins une pièce (22) rigide assemblée audit support (21),
**caractérisé en ce que** ladite pièce (22) rigide est assemblée audit support (21) par un dispositif d'assemblage selon l'une des revendications 1 à 9.

## Patentansprüche

1. Vorrichtung zum Montieren zumindest eines starren Teils, das beigebrachtes Teil (1; 10; 22) genannt wird, auf einem Teil, das Auflage (2; 21) genannt wird, das von einem Rahmen eines Tür- oder Fensterflügels oder ähnlichem getragen wird, wobei die besagte Montagevorrichtung folgendes umfasst:
- eine Schraube (3; 30) umfassend:
. einen Schaft (4), der sich entlang einer Achse erstreckt, und der besagte Schaft (4) zumindest über einen Teil seiner Länge hinweg ein Gewinde umfasst,
. einen Schraubenkopf (5) der sich dazu eignet, um mit einem Schraubwerkzeug zusammenzuwirken, und mit einer Oberfläche, die Druckfläche (6; 60) genannt wird, deren radialen Abmessungen größer sind, als die radialen Abmessungen des besagten Schafts (4), und sich die besagte Druckfläche (6; 60) dazu eignet, um am Ende der Verschraubung mit einem Abschnitt des besagten beigebrachten Teils (1; 10) in Kontakt zu treten, der Kontaktabschnitt (12; 120) genannt wird,
- eine Öffnung (13), die durch das besagte beigebrachte Teil (1; 10; 22) führt, und durch den besagten Kontaktabschnitt (12; 120) eingegrenzt wird, wobei die besagte Öffnung (13) Innenabmessungen aufweist, die sich dazu eignen, um den Durchlass des besagten Gewindeschafts (4) bis zu einem Kontakt zwischen der besagten Druckfläche (6; 60) der Schraube (3; 30) und dem besagten Kontaktabschnitt (12; 120) des beigebrachten Teils (1; 10; 22) zu ermöglichen,
**dadurch gekennzeichnet, dass** die besagte Druckfläche (6; 60) der besagten Schraube (3; 30) und der besagte Kontaktabschnitt (12; 120) des besagten beigebrachten Teils (1; 10; 22) gemeinsame Reliefs (7; 80) und/ oder Verstärkungen (8; 70) aufweisen, die gemeinsame Fügevorrichtungen genannt werden, und im Verhältnis zur besagten Achse des besagten Schafts (4) nicht umlaufsymmetrisch sind, und sich die besagten gemeinsamen Fügevorrichtungen dazu eignen, um sich am Ende der Verschraubung der besagten Schraube (3; 30) in die besagte Auflage (2; 21) ineinander zu fügen, um das Widerstandsmoment der Verschraubung zu erhöhen.

2. Vorrichtung nach Anspruch 1, **dadurch gekennzeichnet, dass** die besagte Schraube (3; 30) eine selbstschneidende Schraube ist, und dadurch, dass die besagte Auflage (2) aus einem weichen Material besteht, in das zuvor im Bereich der Aufnahme der besagten selbstschneidenden Schraube kein Gewinde geschnitten wurde.

3. Vorrichtung nach einem der Ansprüche 1 bis 2, **dadurch gekennzeichnet, dass** der besagte Gewindeschaft (4) ein Doppelspiralgewinde aufweist, um den Ausreißversuchen der Schraube entgegenzuwirken.

4. Vorrichtung nach einem der Ansprüche 1 bis 3, **dadurch gekennzeichnet, dass** die besagten Fügevorrichtungen, die auf der besagten Druckfläche (6) der besagten Schraube (3) angeordnet sind, Rippen (7) sind, und die besagten gemeinsamen Fügevorrichtungen, die auf dem besagten Kontaktabschnitt (12) des beigebrachten Teils (1) angeordnet sind, Aussparungen (8) sind, die sich dazu eignen, die besagten Rippen (7) am Ende der Verschraubung der besagten Schraube (3) aufzunehmen.

5. Vorrichtung nach einem der Ansprüche 1 bis 3, **dadurch gekennzeichnet, dass** die besagten Fügevorrichtungen, die auf der besagten Druckfläche (60) der besagten Schraube (30) angeordnet sind, Aussparungen (70) sind, und die besagten gemeinsamen Fügevorrichtungen, die auf dem besagten Kontaktabschnitt (120) des besagten beigebrachten Teils (10) angeordnet sind, Rippen (80) sind, die sich dazu eignen, sich am Ende der Verschraubung der besagten Schraube (30) in die besagten Aussparungen (70) einzufügen.

6. Vorrichtung nach einem der Ansprüche 4 oder 5, **dadurch gekennzeichnet, dass** die Anzahl der Rippen (7; 80) kleiner ist, als die Anzahl der Aussparungen (8; 70).

7. Vorrichtung nach Anspruch 4, **dadurch gekennzeichnet, dass** die besagten Rippen (7) der besagten Druckfläche (6) der besagten Schraube (3) gleichmäßig um die besagte Achse des besagten Gewindeschafts (4) verteilt sind.

8. Vorrichtung nach Anspruch 7, **dadurch gekennzeichnet, dass** die besagte Druckfläche (6) der besagten Schraube (3) sechs Rippen (7) aufweist, die in einem Winkel von 60° voneinander getrennt sind.

9. Vorrichtung nach einem der Ansprüche 1 bis 8, **dadurch gekennzeichnet, dass** der besagte Schraubenkopf (5) ein Senkkopf ist.

10. Tür- oder Fensterflügel oder ähnliches umfassend:
- einen Rahmen,
- zumindest ein Teil, das Auflage (21) genannt wird, und vom besagten Rahmen getragen wird,
- zumindest ein starres Teil (22), das auf der besagten Auflage (21) montiert wird,
**dadurch gekennzeichnet, dass** das besagte starre Teil (22) durch eine Montagevorrichtung nach einem der Ansprüche 1 bis 9 mit der besagten Auflage (21) verbunden wird.

## Claims

1. Device for joining at least one rigid part, called an attached part (1; 10; 22), to a part, called a support (2; 21), carried by a frame of a door leaf, window leaf or the like, said joining device comprising:
- a screw (3; 30) comprising:
· a rod (4) which extends along an axis, said rod (4) being threaded over at least a portion of its length,
· a screw head (5) which is adapted to cooperate with a screwing tool and which has a surface, called a pressure surface (6; 60), the radial dimensions of which are greater than the radial dimensions of said rod (4), said pressure surface (6; 60) being adapted to come into contact with a portion, called a contact portion (12; 120), of said attached part (1; 10) at the end of screwing,
- a hole (13) which is formed through said attached part (1; 10; 22) and which is delimited by said contact portion (12; 120), said hole (13) having inside dimensions which are adapted to allow said threaded rod (4) to pass through until said pressure surface (6; 60) of the screw (3; 30) is in contact with said contact portion (12; 120) of the attached part (1; 10; 22),
**characterised in that** said pressure surface (6; 60) of said screw (3; 30) and said contact portion (12; 120) of said attached part (1; 10; 22) have conjugate reliefs (7; 80) and/or indentations (8; 70), called conjugate fitting members, which are not rotationally symmetrical relative to said axis of said rod (4), said conjugate fitting members being adapted to fit one inside another at the end of screwing of said screw (3; 30) into said support (2; 21) so as to increase the torque resistant to screwing.

2. Device according to claim 1, **characterised in that** said screw (3; 30) is a self-tapping screw, and **in that** said support (2) is made of a soft material which has not previously been threaded in the region of the zone that is to receive said self-tapping screw.

3. Device according to either claim 1 or claim 2, **characterised in that** said threaded rod (4) has a double helical thread so that it is able to resist attempts to pull out the screw.

4. Device according to any one of claims 1 to 3, **characterised in that** said fitting members provided on said pressure surface (6) of said screw (3) are ribs (7), and said conjugate fitting members provided on said contact portion (12) of said attached part (1) are cut-outs (8) which are adapted to receive said ribs (7) at the end of screwing of said screw (3).

5. Device according to any one of claims 1 to 3, **characterised in that** said fitting members provided on said pressure surface (60) of said screw (30) are cut-outs (70), and said conjugate fitting members provided on said contact portion (120) of said attached part (10) are ribs (80) which are adapted to be housed in said cut-outs (70) at the end of screwing of said screw (30).

6. Device according to either claim 4 or claim 5, **characterised in that** the number of ribs (7; 80) is smaller than the number of cut-outs (8; 70).

7. Device according to claim 4, **characterised in that** said ribs (7) of said pressure surface (6) of said screw (3) are evenly distributed around said axis of said threaded rod (4).

8. Device according to claim 7, **characterised in that** said pressure surface (6) of said screw (3) has six ribs (7) which are separated from one another by an angle of 60°.

9. Device according to any one of claims 1 to 8, **characterised in that** said screw head (5) is countersunk.

10. Door leaf, window leaf or the like comprising:
- a frame,
- at least one part, called a support (21), which is carried by said frame,
- at least one rigid part (22) which is joined to said support (21),
**characterised in that** said rigid part (22) is joined to said support (21) by a joining device according to any one of claims 1 to 9.
